# EUROPEAN PATENT APPLICATION

(11) **EP 4 235 033 A1**
(43) Date of publication of application: **30.08.2023**
(21) Application number: 23156418.8
(22) Date of filing: 13.02.2023
(51) Int. Cl.: F24C 7/06, F24C 14/02

(54) **OVEN WITH TILTING BROILER ASSEMBLY**

(30) Priority: 24.02.2022 US 202217679505
(71) Applicant: Whirlpool Corporation, Benton Harbor, MI 49022 (US)
(72) Inventor: Bianchi, Fabio, 21024 Cassinetta di Biandronno (VA) (IT); Simonetta, Christian, 21024 Cassinetta di Biandronno (VA) (IT)
(74) Representative: Spina, Alessandro

(57) **Abstract**

An oven (10) includes an interior liner (12) defining an interior cavity (14) between two generally parallel, spaced-apart side walls (16, 18), a top wall (20) extending between the two side walls (16, 18), and a back wall (22) extending downwardly from the top wall (20). The oven (10) further includes a broiler element (24) mounted within the interior liner (12) and moveable between a cooking position (P1), wherein the broiler element (24) extends laterally along the top wall (20) in a direction between the two side walls (16, 18) and longitudinally away from the back wall (22), and a cleaning position (P2), wherein the broiler element (24) extends laterally along the back wall (22) in the direction between the two side walls (16, 18) and vertically away from the top wall (20).

## Description

### BACKGROUND OF THE DISCLOSURE

The present disclosure generally relates to an oven, and more specifically, to an oven with a tilting broiler assembly for increasing the efficiency of a pyrolytic cleaning cycle.

Many existing ovens are equipped with self-cleaning functionality, wherein the main heating element and broiler are powered on high for a time sufficient to heat the walls of the interior oven cavity to a temperature in the order of about 475°C (887°F), which is generally sufficient to burn any residue thereon to the point of disintegration or detachment from the walls. Notably, the position of the main heating element adjacent to the lower wall (or cavity floor) takes a far shorter time interval to reach about 475°C (887°F) (e.g. less than two hours), with the side walls and the back wall taking a far longer time (e.g. at least four hours) to reach the same temperature. In this respect, it has been observed that the overall time needed to run a self-cleaning cycle can be reduced with additional solutions for cleaning/heating the back wall and side walls.

### SUMMARY OF THE DISCLOSURE

According to one aspect of the present disclosure, an oven includes an interior liner defining an interior cavity between two generally parallel, spaced-apart side walls, a top wall extending between the two side walls, and a back wall extending downwardly from the top wall. The oven further includes a broiler element mounted within the interior liner and moveable between a cooking position, wherein the broiler element extends laterally along the top wall in a direction between the two side walls and longitudinally away from the back wall, and a cleaning position, wherein the broiler element extends laterally along the back wall in the direction between the two side walls and vertically away from the top wall.

According to another aspect of the present disclosure, a broiler assembly for an oven includes a broiler element configured for resistive heating and first and second hinges connected to opposite ends of the broiler element. The first and second hinges are configured to electrically and mechanically connect with an oven. The mechanical connection moveably supports the broiler element within a cavity of the oven in alternating cooking and cleaning positions and the electrical connection facilitates an electrical connection with the oven for effecting heating of the broiler element. The broiler assembly further includes a shield affixed to at least a portion of the broiler element such that the shield moves with the broiler element between the cooking position and the cleaning position.

According to yet another aspect of the present disclosure, a method for cleaning an oven includes moving a broiler element mounted within an interior cavity of the oven. The interior cavity is defined by an interior liner defining an interior cavity between two generally parallel, spaced-apart side walls, a top wall extending between the two side walls, and a back wall extending downwardly from the top wall. The broiler element is moved from a cooking position, wherein the broiler element extends laterally along the top wall in a direction between the two side walls and longitudinally away from the back wall, to a cleaning position, wherein the broiler element extends laterally along the back wall in the direction between the two side walls and vertically away from the top wall. The method further includes powering the broiler element and the main heating element of the oven at temperatures in the order of 475°C (887°F) e.g. for less than 2.5 hours, thereby carrying out a pyrolytic cleaning cycle.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a side cross-section view of an oven including a tilting broiler mechanism;
FIG. 2 is a perspective view of the oven with the boiler assembly in a cooking position;
FIG. 3 is a perspective view of the cavity of the oven with side panel inserts thereof removed;
FIG. 4 is a perspective view of the cavity during a stage of movement of the broiler assembly from the cooking position into a cleaning position;
FIGS. 5 and 6 are detail views of the oven cavity showing retention pins used to maintain the burner assembly in the cooking position; and
FIGS. 7-9 are detailed views showing the operation and assembly of hinges that facilitate movement of the burner assembly between the cooking position and the cleaning position, while maintaining an electrical connection between the burner element and the oven.

The components in the figures are not necessarily to scale, emphasis instead being placed upon illustrating the principles described herein.

### DETAILED DESCRIPTION

The present illustrated embodiments reside primarily in combinations of method steps and apparatus components related to an oven. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

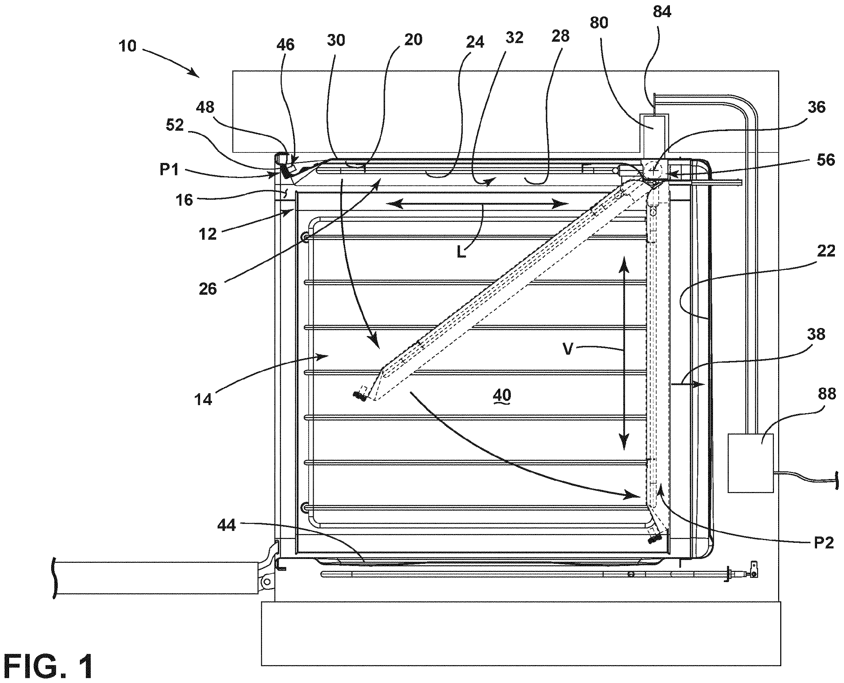

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a ... " does not, without more constraints, preclude the existence of additional identical elements in the process, method, article, or apparatus that comprises the element.

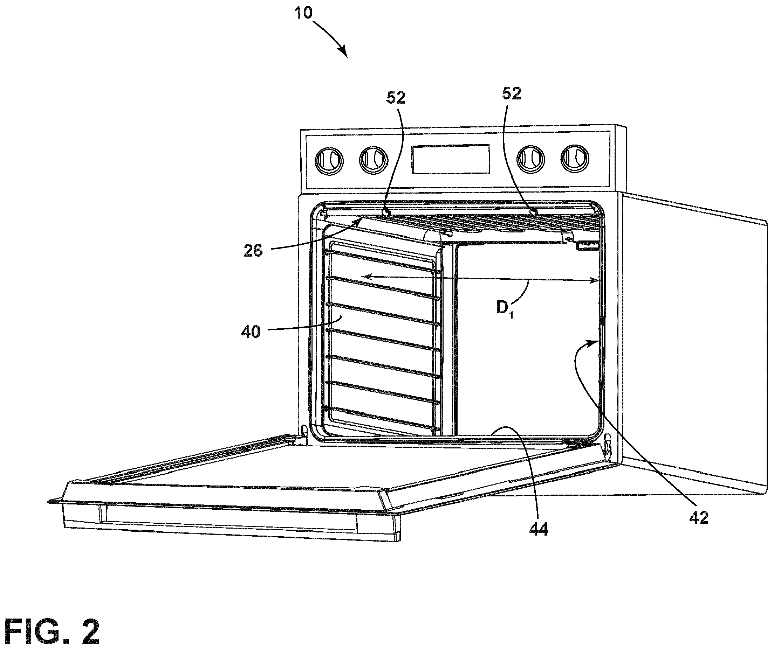

Referring to FIGS. 1-9, reference numeral 10 generally designates an oven. The oven 10 includes an interior liner 12 defining an interior cavity 14 between two generally parallel, spaced-apart side walls 16 and 18, a top wall 20 extending between the two side walls 16 and 18, and a back wall 22 extending downwardly from the top wall 20. The oven 10 further includes a broiler element 24 mounted within the interior liner 12 and moveable between a cooking position P1, wherein the broiler element 24 extends laterally along the top wall 20 in a direction D1 between the two side walls 16 and 18 and longitudinally L away from the back wall 22, and a cleaning position P2, wherein the broiler element 24 extends laterally along the back wall 22 in the direction D1 between the two side walls 16 and 18 and vertically V away from the top wall 20. The oven further comprises a main heating element (not shown), which is positioned outside of the interior liner 12, below a bottom wall 44 thereof.

In a particular aspect, the broiler element 24 can be included in a broiler assembly 26 that further includes a shield 28 affixed to at least a portion of the broiler element 24 such that the shield 28 moves with the broiler element 24 between the cooking position P1 and the cleaning position P2. In this arrangement, a major shield wall 30 of the shield 28 is disposed between the top wall 20 and the broiler element 24 when the broiler assembly 26 is in the cooking position P1. By mounting the broiler element 24 on the shield 28 that sits above the broiler element 24 in the cooking position P1, the shield 28 is positionable against the top wall 20 of the cavity 14. In this manner, the shield 28 effectively covers the top wall 20 and becomes the upper boundary of the cavity 14 during cooking, including with the broiler element 24 in the cooking position P1. As shown, the shield 28 can define a concave inner portion 32 by way of a perimeter wall 34 surrounding the major surface 30 extending away therefrom and downward, in the vertical direction V (when the broiler assembly 26 is in the cooking position P1, as shown in FIGS. 1-3). The broiler element 24 is generally received within the concave inner portion 32 of the shield 28 to protect the broiler element 24 from contact with other objects or the like and to direct the heat radiated therefrom in a downward direction. In general, when the broiler assembly 26 is in the cooking position P1, it is usable as a typical broiler, such as for browning or grilling articles placed below the broiler element 24.

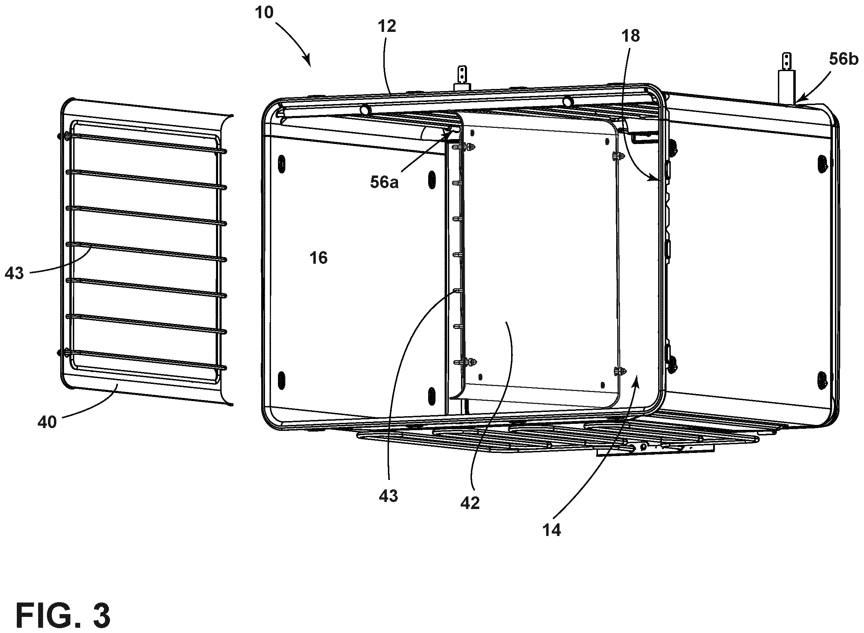

As further shown in FIG. 1, the broiler assembly 26 is mounted to the top wall 20 so as to be rotatable downward along a hinge point 36 disposed toward the back wall 22 into the cleaning position P2, shown in FIGS. 1 and 3. This positioning allows the broiler assembly 26 to be positioned in the above-mentioned vertical direction V within a predetermined distance 38 from the back wall 22, such that the broiler element 24 can be activated to directly heat the back wall 22 during a pyrolytic self-cleaning cycle implemented by the oven 10. Notably, the broiler element 24 is disposed between the back wall 22 of the liner 12 and the major surface 30 of the shield 28 when the broiler assembly 26 is in the cleaning position P2. This arrangement is such that, in heating of the broiler element 24 with the broiler assembly 26 in the cleaning position P2, the shield 28 is also heated and cleaned by the broiler element 24, although shield 28 will likely require less cleaning than back wall 22. In some aspects, the total time for the pyrolytic self-cleaning cycle can be less than two-and-a-half hours or, in some implementations, two hours or less because the proximity of the broiler element 24 adjacent and directly facing the back wall 22, as well as the major surface 30 of the shield 28 (which, as discussed above defines the upper boundary of the cavity 14 during cooking such that the top wall 20 does not require significant cleaning) allows these surfaces to reach a pyrolytic temperature faster than when no heating element is positioned therealong, as is the case with a comparable back wall in a typical oven arrangement. The positioning of the broiler element 24 within the concave portion 32 of the shield 28 helps further direct the heat radiating from the broiler element 24 toward the back wall 22 and contains the heat in the general area of the back wall 22 to further reduce the heating time needed for cleaning.

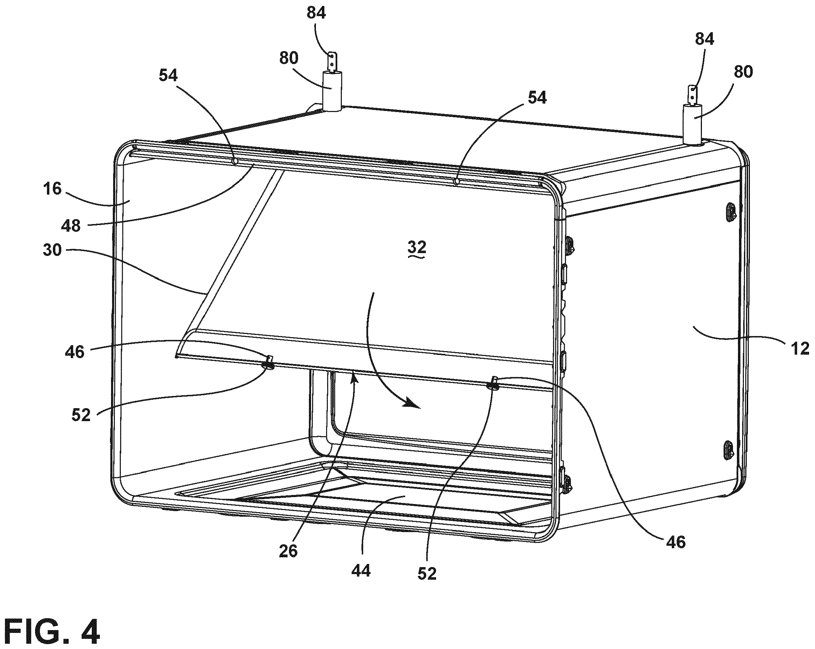

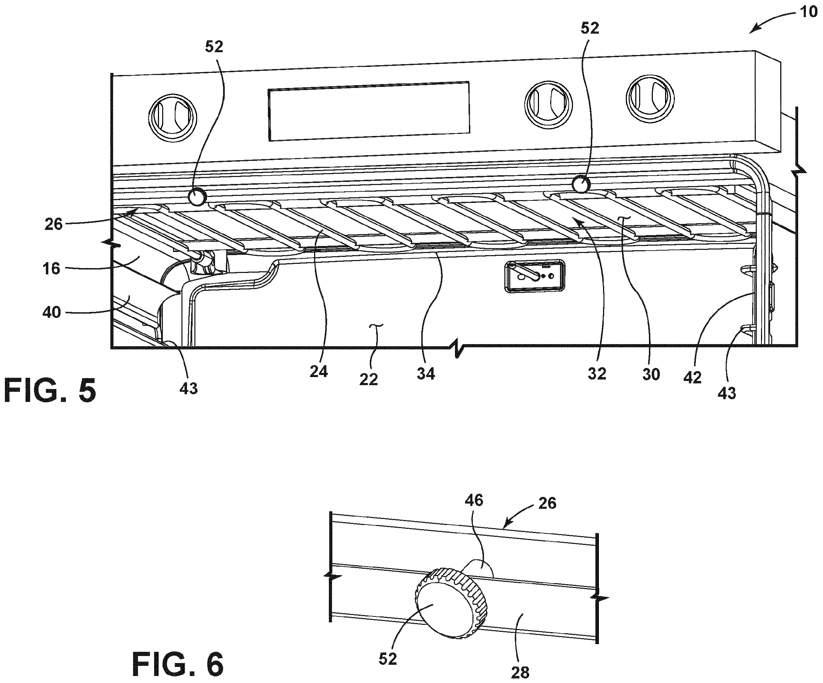

As shown in FIGS. 3 and 4, the oven 10 may further include first and second side panel inserts 40 and 42 removably receivable within the oven cavity 14 and positioned respectively adjacent one of each of the two side walls 16 and 18. As shown in the example of FIGS. 3 and 4, the first and second side panel inserts 40 and 42 cover substantially all of the respective side walls 16 and 18 (i.e., at least about 90% of the surface area thereof) so as to define the left and right bounds of the cavity 14 when oven 10 is in use (in a manner similar to the shield 28 defining the upper bounds). Such an arrangement is, in one aspect, particularly useful in connection with the present tiltable broiler assembly 26 because the first and second side panel inserts 40 and 42 prevent the side walls 16 and 18 from having cooking residue build up thereon so that they do not require significant pyrolytic cleaning. As shown in FIG. 3, the removable side panel inserts 40 and 42 are intended to be removed and cleaned separately (e.g. in a dishwasher) from the remaining oven cavity 14. Accordingly, only the back wall 22, the concave inner portion 32 of the shield 28 and a bottom wall 44 of the liner 12 require pyrolytic cleaning, the back wall 22 and the concave inner portion 32 being simultaneously cleaned by the broiler element 24, as discussed above. The bottom wall 44 is heated for pyrolytic cleaning by the main heating element in the same cycle in which the broiler element 24 is used. In the depicted example, the removable side panel inserts 40 and 42 include respective ladder racks 43 that serve to slidably receive and support the oven racks such that the oven 10 cannot be used without the side panel inserts 40 and 42 in place. As can be seen in FIG. 5, portions of the side panel inserts 40 and 42 are positioned beneath the shield 28 when the broiler assembly 26 is in the cooking position P1. In this manner, the side panel inserts 40 and 42 must be removed before lowering the broiler assembly 26 into the cleaning position P2, which can help to ensure that the cleaning cycle is executed properly (i.e., with the side panel inserts 40 and 42 removed).

After removal of the side panel inserts 40 and 42, the broiler assembly 26 can be released from the cooking position P1 for lowering into the cleaning position P2. In the depicted example, the broiler assembly 26 includes a retention pin 46 that engages a portion of the interior liner 12 to maintain the broiler assembly 26 in the cooking position P1 against the force of gravity, which generally urges the broiler assembly 26 toward the cleaning position P2. The retention pin 46 is releasable from the portion of the interior liner 12 to allow movement of the broiler assembly 26 into the cleaning position P2. In the illustrated example, the pin 46 engages with an intermediate face 48 of the liner 12 that extends between the top wall 20 and an outer flange 50 of the liner 12, although other arrangements are possible. Additionally, in the depicted example, the pin 46 is rigidly coupled or otherwise formed with a knob 52 to facilitate grasping of the pin 46 and outward pulling thereof by the user against the inward biasing of the pin 46. In the depicted example, the broiler assembly 26 includes two such pins 46 with connected knobs 52 in spaced apart-locations along the shield 28 and engaging with respective holes 54 in the inner face 48 of the liner 12 for additional support for the broiler assembly 26 in the cooking position P1 and to prevent inadvertent releasing of the broiler assembly 26.

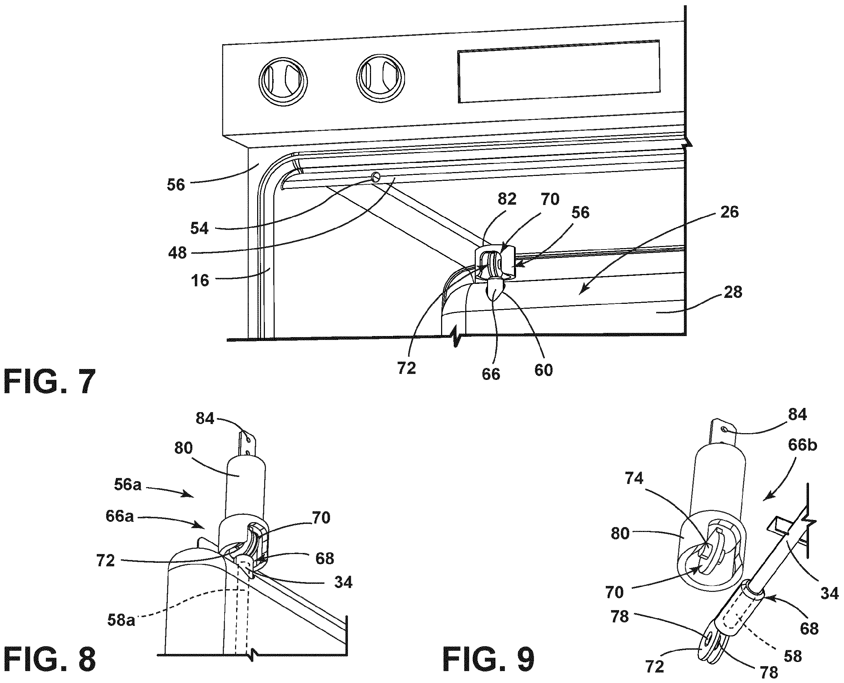

As shown in detail in FIGS. 7-9, the broiler assembly 26 is rotatably mounted within the cavity 14 by way of electrical connections integrated in hinges 56 coupled with the broiler element 24. In this arrangement, the broiler element 24 is particularly in the form of a resistive heating element. In this respect, the depicted hinges 56a and 56b are connected to opposite ends 58a and 58b of the resistive heating broiler element 24 and are configured to transmit an electric current through the hinges 56a and 56b and the resistive heating broiler element 24, while allowing movement of the broiler element 24 between the cooking position P1 and the cleaning position P2, including by movement about the hinge point 36. As shown, the hinges 56a and 56b provide sufficient support for the broiler element 24, in combination with the support of the above-described pins 46 in the cooking position P1, and provide a closed electrical circuit through broiler element 24 for powering heating thereof in both the cooking position P1 and the cleaning position P2. The shield 28, which can be mounted to the broiler element 24 for support thereof, can define first and second apertures 60 such that the first and second ends 58a and 58b can extend therethrough to connect with the respective hinges 56a and 56b an outer portion 62 of the shield 28 with the majority of the broiler element 24 positioned within the concave inner portion 32.

As shown, the hinges 56a and 56b each include a first hinge portion 64a and 64b connected at each end 58a and 58b of the broiler element 24. The first hinge portions 64a and 64b surround the ends 58a and 58b of the broiler element 24 that extend through the apertures 60a and 60b in the shield 28 by being in the form of ceramic insulating sleeves that are positioned between the ends 58a, 58b and the apertures 60a and 60b. Second hinge portions 66a and 66b respectively connect with the first hinge portions 64a and 64b. In particular, the second hinge portions 66a and 66b can each include a receiver 70 that rotatably couples with a connector 72 fixed on the above-described first hinge portions 64a and 64b. As shown, the receiver 70 is defined by a conductive disc 74 with two axles 76 laterally extending therefrom. The connector 72 is defined by a pair of conductive discs 74 spaced apart from each other by a distance generally corresponding with the thickness of the conductive disc 74 of the receiver 70 such that the disc 74 of the receiver 70 can fit therebetween. The conductive discs 74 of the connector 72 each define apertures 78 that receive the axles 76 of the receiver 70 to couple the connector 72 to the receiver 70 in the above-described rotatable manner. In this respect, the centers of the axles 76 and apertures 78 are aligned with and/or define the hinge point 36 about which the broiler assembly 26 rotates.

As further shown, each receiver 70 is rigidly coupled with a post 80 such that the rotation of the connector 72 relative to the receiver 70 facilitates movement of the broiler assembly 26, including the broiler element 24, relative to the sleeve posts 80. The posts 74a and 74b are each configured to extend through a respective aperture 82 in the liner 12. In the depicted example the apertures 82 are defined within the top wall 20, although other arrangements are possible. The posts 80 extend through the apertures 82 for mechanical connection with the oven 10 and, accordingly, may further engage with respective plug holes therein that are mechanically supported above the top wall 20 of the liner 12. The above-described ends 58a and 58b extend away from the hinge point 36 in a direction perpendicular to an axis of the respective posts 74a and 74b when in the cooking position P1 and parallel to the axis when in the cleaning position P2, as shown in the figures. As shown in FIGS. 8 and 9, the hinges 56a and 56b can each further include a conductive tab 84 extending through the posts 80 and protruding outward from respective ends thereof opposite the broiler element 24 for electrically connecting the broiler element 24 with a current source (i.e. power source) of the oven 10 when the posts 80 are mechanically connected with the oven 10. In this manner, the conductive tabs 84 can extend through the posts 80 to connect with the receiver 70, which is of a conductive material to provide the flow of electrical current to the receiver 70. The connection between the above-described conductive discs 74 maintains the electrical connection between the broiler element 24 and the oven 10 during movement of the broiler element 24 relative to the post 80 between the cooking position P1 and the cleaning position P2. The presence of discs 74 in the above-described arrangement provides stability for the rotating mechanical connection and provides additional surface area for the electrical connection, including by way of bumps 86 that are can be positioned along at least one of the discs 74 to contact the inner surfaces of at least one other disc 74 under pressure, without an undesirable increase in friction within the resulting joint.

As can be appreciated, the oven 10 can further include a controller 88 configured to execute a cooking mode, including by causing heating of the broiler element 24, and a cleaning mode, including operating the broiler element 24, for pyrolytic cleaning of the back wall 22. As discussed above, the present arrangement can facilitate cleaning of the back wall 22 during a cleaning cycle that lasts for less than two-and-a-half hours. In this respect, an additional aspect of the disclosure can be related to a method for cleaning oven 10 and can include moving broiler element 24 within the interior cavity 14 of the oven 10. As discussed above, the interior cavity 14 is defined by an interior liner 12 including two generally parallel, spaced-apart side walls 16 and 18, a top wall 20 extending between the two side walls 16 and 18, and back wall 22 extending downwardly from the top wall 20. The broiler element 24 is moved from the above-described cooking position P1, wherein the broiler element 24 extends laterally along the top wall 20 in a direction D1 between the two side walls 16 and 18 and longitudinally L away from the back wall 22, to a cleaning position P2, wherein the broiler element 24 extends laterally along the back wall 22 in the direction D1 between the two side walls 16 and 18 and vertically V away from the top wall 20. The method further includes causing heating of the broiler element 24 and a cleaning mode including operating the broiler element for pyrolytic cleaning of the back wall 22 for less than 2.5 hours.

The method can further include removing first and second side panel inserts 40 and 42 from the oven cavity 14. As discussed above, the first and second side panel inserts 40 and 42 are initially positioned within the oven cavity 14 respectively adjacent one of each of the two side walls 16 and 18 and beneath the shield 28. The broiler assembly 26 can further include the retention pin 46 engaging a portion of the interior liner 12 to maintain the broiler assembly 26 in the cooking position P1 against the force of gravity. In this respect, moving the broiler element 24 (i.e., with the broiler assembly 26) between the cooking position P1 and the cleaning position P2 includes releasing the retention pin 46 from the portion of the interior liner 12 (e.g., hole 54) to allow movement of the broiler assembly 26 into the cleaning position P2. Additional aspects of such a method can be appreciated in light of the above discussion regarding the operation and use of the oven 10.

The invention disclosed herein is further summarized in the following paragraphs and is further characterized by combinations of any and all of the various aspects described therein.

According to another aspect of the present disclosure, an oven includes an interior liner defining an interior cavity between two generally parallel, spaced-apart side walls, a top wall extending between the two side walls, and a back wall extending downwardly from the top wall. The oven further includes a broiler element mounted within the interior liner and moveable between a cooking position, wherein the broiler element extends laterally along the top wall in a direction between the two side walls and longitudinally away from the back wall, and a cleaning position, wherein the broiler element extends laterally along the back wall in the direction between the two side walls and vertically away from the top wall.

The oven can further include a shield affixed to at least a portion of the broiler element in a broiler assembly such that the shield moves with the broiler element between the cooking position and the cleaning position.

A major surface of the shield can be disposed between the top wall and the broiler element when the broiler assembly is in the cooking position, and the broiler element can be disposed between the back wall and the major surface when the broiler assembly is in the cleaning position.

The shield can define a concave inner portion in which the portion of the broiler element is received.

The oven can further include first and second side panel inserts removably receivable within the oven cavity respectively adjacent one of each of the two side walls, the first and second side panel inserts being positioned beneath the shield when the broiler assembly is in the cooking position.

The broiler assembly can further include a retention pin engaging a portion of the interior liner to maintain the broiler assembly in the cooking position against a force of gravity, the retention pin being releasable from the portion of the interior liner to allow movement of the broiler assembly into the cleaning position.

The broiler element can be a resistive heating element, and the oven can further include first and second hinges connected to opposite ends of the resistive heating element and configured to transmit an electric current therethrough to the resistive heating element while allowing movement of the broiler element between the cooking position and the cleaning position.

The oven can further include a controller configured to execute a cooking mode including by causing heating of the broiler element and a cleaning mode including operating the broiler element for pyrolytic cleaning of the back wall for less than 2.5 hours.

According to yet another aspect, a broiler assembly for an oven includes a broiler element configured for resistive heating and first and second hinges connected to opposite ends of the broiler element. The first and second hinges are configured to electrically and mechanically connect with an oven. The mechanical connection moveably supports the broiler element within a cavity of the oven in alternating cooking and cleaning positions and the electrical connection facilitates an electrical connection with the oven for effecting heating of the broiler element. The broiler assembly further includes a shield affixed to at least a portion of the broiler element such that the shield moves with the broiler element between the cooking position and the cleaning position.

The first and second hinges can each include a stem extending through an aperture in a liner of the oven for mechanical connection therewith, the first and second ends of the broiler element extending away from the hinge in a direction perpendicular to an axis of the respective stems when in the cooking position and parallel to the axis when in the cleaning position.

The first and second hinges can each further include a conductive tab extending through the stem and protruding outward from respective ends thereof opposite the broiler element for electrically connecting the broiler element with a current source of the oven when the stems are mechanically connected with the oven.

The first and second hinges can each further include a receiver having a first conductive disc and rigidly coupled with one of the sleeves or the corresponding end of the broiler element and a connector moveably coupling with the receiver to facilitate movement of the broiler element relative to the sleeve and including a second conductive disc contacting the first conductive disc to maintain an electrical connection between the oven during movement of the broiler element relative to the sleeve between the cooking position and the cleaning position.

The shield can further define a concave inner portion in which the portion of the broiler element is received.

The shield can define first and second apertures, and the broiler can define first and second ends extending through respective ones of the first and second apertures to connect with the first and second hinges, respectively, on an outer portion of the shield opposite the concave inner portion.

According to yet another aspect, a method for cleaning an oven includes moving a broiler element mounted within an interior cavity of the oven. The interior cavity is defined by an interior liner defining an interior cavity between two generally parallel, spaced-apart side walls, a top wall extending between the two side walls, and a back wall extending downwardly from the top wall. The broiler element is moved from a cooking position, wherein the broiler element extends laterally along the top wall in a direction between the two side walls and longitudinally away from the back wall, to a cleaning position, wherein the broiler element extends laterally along the back wall in the direction between the two side walls and vertically away from the top wall. The method further includes causing heating of the broiler element and a cleaning mode including operating the broiler element for pyrolytic cleaning of the back wall for less than 2.5 hours.

The broiler element is included in a broiler assembly that further includes a shield affixed to at least a portion of the broiler element, and moving the broiler element between the cooking position and the cleaning position causes the shield to move with the broiler element between the cooking position and the cleaning position.

A major surface of the shield can be disposed between the top wall and the broiler element when the broiler assembly is in the cooking position, and the broiler element can be disposed between the back wall and the major surface when the broiler assembly is in the cleaning position.

The method can further include removing first and second side panel inserts from the oven cavity, the first and second side panel inserts being initially positioned within the oven cavity respectively adjacent one of each of the two side walls and beneath the shield.

The broiler assembly can further include a retention pin engaging a portion of the interior liner to maintain the broiler assembly in the cooking position against a force of gravity, and moving the broiler element between the cooking position and the cleaning position can include releasing the retention pin from the portion of the interior liner to allow movement of the broiler assembly into the cleaning position.

The broiler element can be a resistive heating element and the oven can include first and second hinges connected to opposite ends of the resistive heating element and configured to maintain the electrical connection between the oven and the broiler element during movement of the broiler element between the cooking position and the cleaning position.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A broiler assembly (26) for an oven (10), comprising:
a broiler element (24) configured for resistive heating;
first and second hinges (56a, 56b) connected to opposite ends (58a, 58b) of the broiler element (24), the first and second hinges (56a, 56b) being configured to electrically and mechanically connect with the oven (10), the mechanical connection moveably supporting the broiler element (24) within a cavity (14) of the oven (10) in alternating cooking and cleaning positions (P1, P2) and the electrical connection allowing current to flow from the oven (10) to the broiler element (24) for effecting heating of the broiler element (24); and
a shield (28) affixed to at least a portion of the broiler element (24) such that the shield (28) moves with the broiler element (24) between the cooking position (P1) and the cleaning position (P2).

2. The broiler assembly (26) of claim 1, wherein the first and second hinges (56a, 56b) each include a stem extending through an aperture (60) in a liner (12) of the oven (10) for mechanical connection therewith, the first and second ends (58a, 58b) of the broiler element (24) extending away from the hinge (56) in a direction perpendicular to an axis of the respective stems when in the cooking position (P1)and parallel to the axis when in the cleaning position (P2).

3. The broiler assembly (26) of claim 2, wherein the first and second hinges (56a, 56b) each further include a conductive tab (84) extending through the stem and protruding outward from the respective ends (58a, 58b) thereof opposite the broiler element (24) for electrically connecting the broiler element (24) with a current source of the oven (10) when the stems are mechanically connected with the oven (10).

4. The broiler assembly (26) of either claim 10 or claim 3, wherein the first and second hinges (56a, 56b) each further include:
a receiver (70) having a first conductive disc (74) and rigidly coupled with one of the stems or the corresponding end of the broiler element (24); and
a connector (72) moveably coupling with the receiver (70) to facilitate movement of the broiler element (24) relative to the stem and including a second conductive disc contacting the first conductive disc to maintain the electrical connection between the oven (10) during movement of the broiler element (24) relative to the sleeve between the cooking position (P1) and the cleaning position (P2).

5. The broiler assembly (26) of any of the preceding claims, wherein the shield (28) defines a concave inner portion (32) in which the portion of the broiler element (24) is received.

6. The broiler assembly (26) of claim 5, wherein:
the shield (28) defines first and second apertures (60); and
the broiler element (24) defines first and second ends (58a, 58b) extending through respective ones of the first and second apertures (60a, 60b) to connect with the first and second hinges (56a, 56b), respectively, on an outer portion of the shield (28) opposite the concave inner portion (32).

7. An oven (10), comprising:
an interior liner (12) defining an interior cavity (14) between two generally parallel, spaced-apart side walls (16, 18), a top wall (20) extending between the two side walls (16, 18), and a back wall (22) extending downwardly from the top wall (20); and
the broiler assembly (26) of any of the preceding claims, wherein the broiler element (24) extends laterally along the top wall (20) in a direction (D1) between the two side walls (16, 18) and longitudinally (L) away from the back wall (22) when in the cooking position (P1) and extends laterally along the back wall (22) in the direction (D) between the two side walls (16, 18) and vertically (V) away from the top wall (20) when in the cleaning position (P2).

8. The oven (10) of claim 7, wherein:
a major surface (30) of the shield (28) is disposed between the top wall (20) and the broiler element (24) when the broiler assembly (26) is in the cooking position (P1); and
the broiler element (24) is disposed between the back wall (22) and the major surface (30) when the broiler assembly (26) is in the cleaning position (P2).

9. The oven (10) of claim 7, further comprising first and second side panel inserts (40, 42) removably receivable within the interior cavity (14) respectively adjacent one each of the two side walls (16, 18), the first and second side panel inserts (40, 42) being positioned beneath the shield (28) when the broiler assembly (26) is in the cooking position (P1).

10. The oven (10) of claim 7, wherein the broiler assembly (26) further includes a retention pin (46) engaging a portion of the interior liner (12) to maintain the broiler assembly (26) in the cooking position (P1) against a force of gravity, the retention pin (46) being releasable from the portion of the interior liner (12) to allow movement of the broiler assembly (26) into the cleaning position (P2).

11. The oven (10) of claim 7, wherein the broiler element (24) is a resistive heating element, the oven (10) further comprising:
first and second hinges (56a, 56b) connected to opposite ends (58) of the resistive heating element and configured to transmit an electric current therethrough to the resistive heating element while allowing movement of the broiler element (24) between the cooking position (P1) and the cleaning position (P2).

12. The oven (10) of claim 7, further comprising a controller (88) configured to execute a cooking mode including by causing heating of the broiler element (24) and a cleaning mode including operating the broiler element (24) for pyrolytic cleaning of the back wall (22) for less than 2.5 hours.
